(19) Europäisches Patentamt / European Patent Office / Office européen des brevets

(11) **EP 2 855 238 B1**

(12) **FASCICULE DE BREVET EUROPEEN**

(45) Date de publication et mention
de la délivrance du brevet:
**29.06.2016 Bulletin 2016/26**

(21) Numéro de dépôt: **13727246.4**

(22) Date de dépôt: **02.05.2013**

(51) Int Cl.:
*B62D 1/28* (2006.01)    *B62D 7/15* (2006.01)
*B62D 15/02* (2006.01)    *B60Q 9/00* (2006.01)
*B60W 30/12* (2006.01)    *G06K 9/00* (2006.01)
*B60W 10/20* (2006.01)

(86) Numéro de dépôt international:
**PCT/FR2013/050973**

(87) Numéro de publication internationale:
**WO 2013/178899 (05.12.2013 Gazette 2013/49)**

(54) **DISPOSITIF DE CONTROLE DE TRAJECTOIRE D'UN VEHICULE**

VORRICHTUNG ZUR STEUERUNG DES KURSES EINES FAHRZEUGS

DEVICE FOR CONTROLLING THE COURSE OF A VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **01.06.2012 FR 1255068**

(43) Date de publication de la demande:
**08.04.2015 Bulletin 2015/15**

(73) Titulaire: **Renault S.A.S.
92100 Boulogne-Billancourt (FR)**

(72) Inventeurs:
• **MINOIU ENACHE, Nicoleta
F-78000 Versailles (FR)**
• **GUEGAN, Stéphane
F-78000 Versailles (FR)**

(56) Documents cités:
**EP-A1- 1 403 137        EP-A1- 1 431 120
EP-A1- 1 544 080        WO-A1-2005/037592
WO-A1-2011/042791        WO-A1-2011/161535
US-A1- 2004 215 393        US-A1- 2010 023 181**

**Description**

L'invention concerne un dispositif d'élaboration en temps réel de contrôle de trajectoire d'un véhicule. L'invention concerne aussi un véhicule équipé de ce dispositif.

L'invention répond notamment à un besoin de prévention active des accidents. Les accidents par sortie involontaire de la voie de circulation représentent encore aujourd'hui une part importante de l'accidentologie. Pour renforcer la sécurité des passagers, les constructeurs automobiles mettent déjà en oeuvre une prévention passive en réalisant des véhicules de plus en plus résistants aux chocs et absorbant une part importante de l'énergie due à l'impact. La prévention active consiste à rendre le véhicule capable d'évaluer sa dynamique et de reconnaître son environnement afin de disposer d'une mesure de risque qui reflète la situation. Des actions peuvent alors être entreprises automatiquement ou en partage avec le conducteur afin de maintenir le véhicule dans sa voie de circulation en cas de manque de vigilance, d'endormissement, de malaise ou d'événement extérieur impromptu tel qu'une rafale soudaine de vent ou une irrégularité conséquente de la chaussée. Il s'agit de la fonction de sécurité active de maintien de trajectoire (« Lane Keeping » ou « Lane Departure Avoidance » en anglais).

Parmi les connaissances de l'état antérieur de la technique, le document US7236884 divulgue un appareil de prévention de sortie de voie pour un véhicule automobile. Une force de freinage et/ou un pilotage de direction sont appliqués pour contrôler une vitesse de lacet de façon à ramener le véhicule au centre de la voie de circulation en cas de déviation causée par une irrégularité de la route.

Le procédé et le dispositif divulgués dans ce document agit sur la direction des roues avant qui, pour un conducteur du véhicule, est générateur de trouble. Le conducteur peut en effet ressentir une gêne dans ce qu'il ressent sur son volant.

WO2011/042791 est considéré comme l'état de la technique le plus proche révèle le préambule des revendications 1 et 8.

De façon générale dans l'état antérieur de la technique, l'assistance active est fournie soit par l'intermédiaire de la direction assistée électrique des roues avant, soit par freinage différentiel des roues. Dans le premier cas le conducteur ressent au volant l'intervention de l'assistance, fait qui peut être désagréable ou source d'incompréhension. Dans le deuxième cas un freinage non souhaité du véhicule est réalisé et cette action peut être mal perçue par le conducteur. D'autre part, l'action sur le freinage est nécessairement limitée dans le temps et ses occurrences, en d'autres termes le nombre des freinages possibles à faire accepter par le conducteur, réduites. L'action sur le freinage ne permet pas d'envisager une aide permanente de maintien dans la voie.

Un problème important pour réaliser des automatismes de fonctions actives de maintien de trajectoire, est celui du partage des actions de guidage du véhicule avec le conducteur.

Un problème incident est celui de trouver l'actionneur adéquat pour un bon compromis entre l'action automatique active qui change la trajectoire du véhicule pour prévenir la sortie de voie et le ressenti du conducteur dont les actions ne sont ni connues, ni prévisibles.

L'invention a pour objectif de répondre aux problèmes posés par l'état antérieur de la technique, notamment en termes d'efficacité tout en évitant des pertes d'énergie regrettables.

Pour atteindre cet objectif, l'invention se fixe le but de ne pas utiliser le même actionneur que le conducteur de façon à ne pas interférer avec lui et d'éviter de perdre de l'énergie et de la vitesse comme c'est le cas lors d'un freinage.

Dans ce but, l'invention a pour objet un dispositif de contrôle de trajectoire d'un véhicule, comprenant au moins une entrée de réception d'au moins une grandeur représentative d'un ou plusieurs écarts entre une trajectoire de référence et une trajectoire effective du véhicule, caractérisé en ce qu'il comprend moins une sortie de production en temps réel d'au moins une consigne de braquage applicable à au moins une roue arrière du véhicule de manière à maintenir et/ou ramener ledit véhicule sur sa trajectoire de référence.

Particulièrement, le dispositif comprend :

- au moins un module d'élaboration en temps réel d'au moins une correction stabilisante variant linéairement par rapport à chaque écart reçu avec un coefficient de proportionnalité quantifié hors ligne de façon à optimiser la manière de varier de la correction stabilisante ;
- au moins un module de supervision paramétré hors ligne pour générer un coefficient de pondération associé en temps réel à un contexte de fonctionnement du véhicule ; et
- au moins un module d'ajustement agencé pour obtenir ladite consigne de braquage en multipliant ladite correction stabilisante par ledit coefficient de pondération en temps réel.

Plus particulièrement, ledit coefficient de pondération varie entre une valeur minimale fixée préalablement supérieure ou égale à zéro et une valeur maximale fixée préalablement inférieure ou égale à l'unité, en fonction dudit contexte de fonctionnement.

Avantageusement, ledit contexte de fonctionnement est quantifié par un écart latéral de distance entre le point milieu d'un essieu du véhicule et le point correspondant sur la trajectoire de référence.

Notamment, ledit coefficient de pondération est croissant lorsque ledit écart latéral de distance augmente en valeur absolue.

De préférence, le module de supervision comprend au moins une colonne de cellules mémoire pour contenir au moins un vecteur de gain qui comporte des coordonnées comprenant au moins le ou lesdits coefficients de proportionnalité.

Particulièrement, le vecteur de gain est quantifié de manière à ce qu'une matrice d'asservissement en boucle fermée comporte des pôles à partie réelle négative pour toute valeur du coefficient de pondération, ladite matrice d'asservissement comportant une matrice d'évolution d'état du véhicule et le coefficient de pondération multiplié par un vecteur d'interaction multiplié par le vecteur de gain.

Plus particulièrement, le vecteur de gain comporte des valeurs dédiées à une vitesse courante du véhicule à l'instant où le vecteur de gain est exploité.

L'invention a aussi pour objet un procédé de production hors ligne du vecteur de gain selon l'invention, dans lequel le vecteur de gain est obtenu au moyen d'un outil retrouvant par optimisation convexe une matrice inconnue et un vecteur inconnu vérifiant deux inégalités matricielles linéaires négatives respectivement pour la valeur minimale et pour la valeur maximale du coefficient de pondération de sorte que le vecteur de gain résulte du produit du vecteur inconnu retrouvé par l'inverse de la matrice inconnue retrouvée.

Particulièrement, on fournit à l'outil des valeurs maximales admissibles d'angle de braquage de roues arrière et d'écarts de trajectoire de manière à ce que l'outil retrouve un vecteur inconnu et une matrice inconnue qui respectent lesdites valeurs maximales admissibles.

Avantageusement, on configure l'outil pour effectuer la recherche par optimisation convexe en minimisant la trace de la matrice inconnue.

L'invention a également pour objet un véhicule automobile qui comprend au moins un dispositif tel que caractérisé ci-dessus pour élaborer en temps réel au moins une consigne de braquage sur au moins une roue arrière du véhicule.

La solution de l'invention présente plusieurs avantages.

Les roues arrière du véhicule sont braquées suivant une loi de commande en boucle fermée qui prend en compte l'action du conducteur sur le volant et de la position du véhicule sur la voie de circulation.

La loi de commande des roues arrières directrices permet une présence simultanée d'une action automatique avec l'action du conducteur pour l'aider à maintenir le véhicule au centre de la voie en le soulageant et, en absence de l'action du conducteur, permet d'éviter les sorties de voie involontaires.

Le coefficient de pondération constitue un paramètre unique de réglage variable en temps réel qui règle l'intensité de l'intervention de l'assistance.

La loi de commande en boucle fermée est stable pour une plage de valeur du paramètre de réglage qui varie en temps réel.

Les limitations de braquage de l'actionneur des roues arrière directrices, sont prises en compte dans la conception de la loi de commande.

La loi de commande est optimisée pour assurer un dépassement latéral minimal par rapport à la position initiale du véhicule sur la voie de circulation pendant le régime transitoire vers le centre de la voie.

La loi de commande est optimisée pour avoir un temps de réponse minimal compte tenu des contraintes à respecter.

D'autres caractéristiques et avantages apparaîtront à la lecture de la description qui suit, en référence aux dessins annexés dans lesquels :

- la figure 1 représente un véhicule auquel l'invention est applicable,
- la figure 2 est un schéma de dispositif conforme à l'invention,
- la figure 3 est un schéma de modélisation du parcours du véhicule,
- la figure 4 est une courbe d'évolution possible d'un coefficient de pondération en fonction de la position du véhicule par rapport à sa trajectoire de référence.

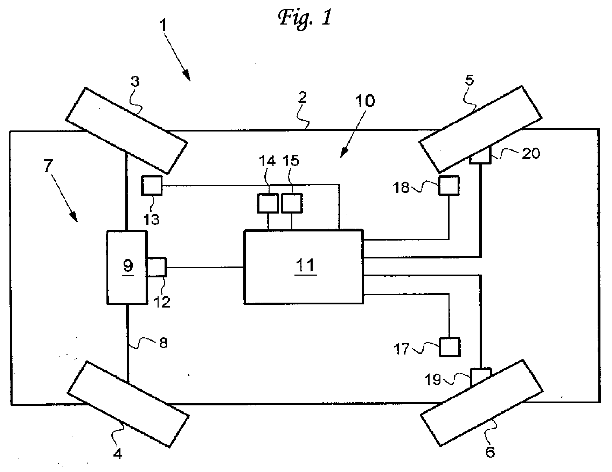

Comme on peut le voir sur la figure 1, le véhicule 1 comprend un châssis 2, deux roues avant directrices 3 et 4 et deux roues arrière directrices 5 et 6, les roues étant reliées au châssis 2 par un mécanisme de suspension non représenté.

Le véhicule 1 se complète par un système de direction 7 comprenant une crémaillère 8 disposée entre les roues avant 3 et 4, un actionneur de crémaillère 9 apte à orienter les roues avant 3 et 4 par l'intermédiaire de la crémaillère 8 en fonction d'ordres reçus, de façon mécanique ou électrique, en provenance d'un volant de direction non représenté, à disposition d'un conducteur du véhicule.

Le système de commande d'aide au braquage 10 comprend une unité de commande 11, un capteur 12 de la position de braquage des roues avant 3 et 4, par exemple positionné sur l'actionneur 9, un capteur 13 de la vitesse de rotation des roues avant permettant de déterminer la vitesse

V du véhicule, un capteur 14 de la vitesse de lacet $\dot{\psi} = \partial\Psi/\partial t$ du véhicule, c'est-à-dire de la vitesse de rotation du véhicule autour de son centre de gravité suivant un axe vertical, et un capteur 15 de l'accélération latérale au centre de gravité du véhicule. Le capteur 14 est par exemple un gyroscope. Le capteur 15 n'est généralement pas nécessaire au fonctionnement de la présente invention.

En outre, le système 10 comprend des capteurs 17 et 18 de l'angle de braquage des roues arrière 5 et 6, et des actionneurs 19 et 20 permettant d'orienter lesdites roues arrière 5 et 6. Toutefois, un seul capteur 17 et un seul actionneur 19 peuvent suffire à la détection de l'angle de braquage et à l'orientation des roues arrière 5 et 6. Les capteurs de position et de vitesse peuvent être de type optique ou encore magnétique, par exemple à effet Hall, coopérant avec un codeur solidaire d'une partie mobile tandis que le capteur est non tournant.

L'unité de commande 11 peut être réalisée sous la forme d'un microprocesseur équipé d'une mémoire vive, d'une mémoire morte, d'une unité centrale et d'interfaces d'entrée/sortie permettant de recevoir des informations des capteurs et d'envoyer des instructions, notamment aux actionneurs 19 et 20.

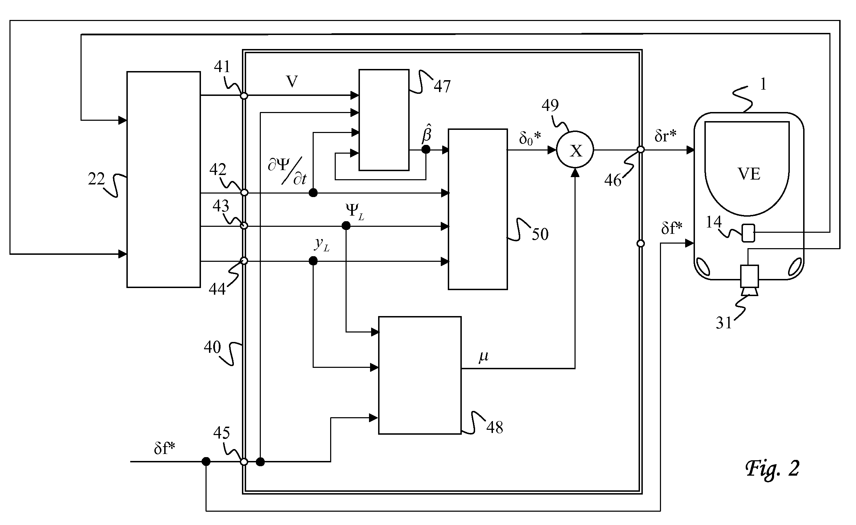

Plus précisément, l'unité de commande 11 comprend un dispositif de contrôle 40 de trajectoire du véhicule 1, expliqué à présent en référence à la figure 2.

Dans le mode de réalisation illustré par la figure 2, le dispositif de contrôle 40 comprend d'une part des entrées 41, 42, 43, 44 de réception d'une grandeur représentative totalement ou partiellement respectivement d'un écart $\beta$, $\partial\Psi/\partial t$, $\psi_L$, $y_L$ entre une trajectoire de référence et une trajectoire effective du véhicule et d'autre part au moins une sortie 46 de production d'une consigne de braquage $\delta_r^*$ qui est appliquée aux roues arrière 5, 6 du véhicule 1.

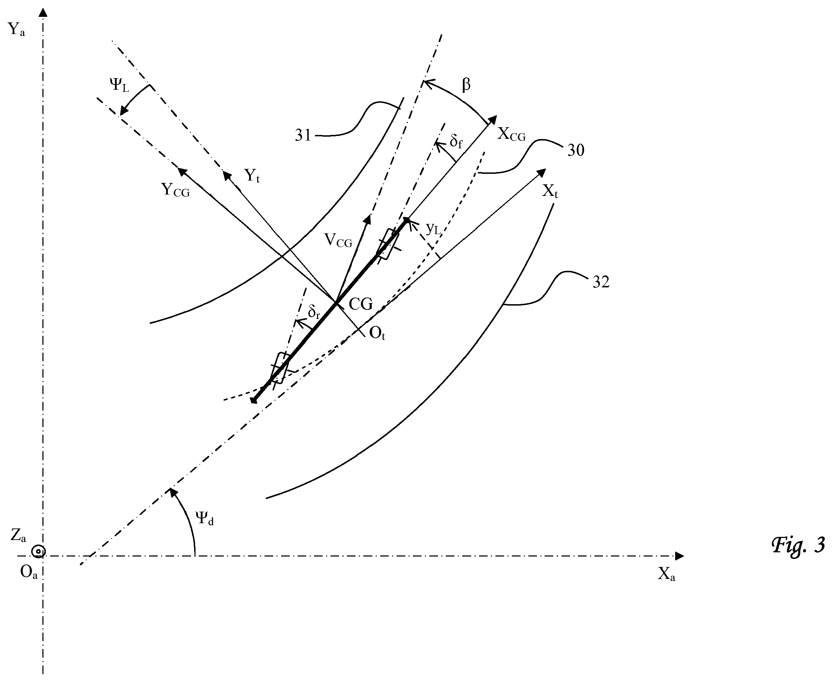

Avant de rentrer dans le détail de la structure et du fonctionnement du dispositif 40, on rappelle les lois comportementales du véhicule 1 sur une trajectoire 30 de référence représentée en pointillés sur la figure 3.

L'analyse du suivi de la trajectoire 30 par le véhicule 1 est abordée par un modèle bicyclette. De manière connue dans le domaine technique considéré, le modèle bicyclette assimile le véhicule 1 à une barre filiforme qui passe par le centre de gravité CG du véhicule et qui comporte le même moment d'inertie J autour d'un axe perpendiculaire au plan de la figure passant par le centre de gravité, et la même masse M que le véhicule.

La trajectoire 30 de référence est représentée dans un repère absolu $\{O_a, X_a, Y_a\}$. A chaque instant t, la position du véhicule est repérée par rapport à un point $O_t$ de la trajectoire qui constitue l'origine d'un repère relatif cinématique $\{O_t, X_t, Y_t\}$ dans lequel l'axe $X_t$ est tangent à la trajectoire au point $O_t$. L'axe $X_t$ fait un angle $\psi_d$ avec l'axe $X_a$ du repère absolu. L'angle $\psi_d$ est généralement nommé angle de cap visé dans le domaine technique auquel appartient l'invention.

Lorsque le véhicule suit parfaitement sa trajectoire à l'instant t, le centre de gravité CG est confondu avec le point $O_t$ de la trajectoire 30. Ce n'est pas le cas lorsque le centre de gravité CG est déporté sur l'axe $Y_t$ qui est perpendiculaire à l'axe $X_t$ dans le plan de la figure 3.

Le centre de gravité CG constitue l'origine d'un repère relatif lié $\{CG, X_{CG}, Y_{CG}\}$ au véhicule dans lequel l'axe $X_{CG}$ est colinéaire à la barre à laquelle le véhicule est assimilé dans le modèle bicyclette. Le repère relatif lié $\{CG, X_{CG}, Y_{CG}\}$ fait un angle $\psi_L$ avec le repère relatif cinématique $\{O_t, X_t, Y_t\}$. La valeur de l'angle $\psi_L$ est nulle dans le cas idéal où le véhicule est dirigé selon la tangente à la trajectoire 30. Dans le cas contraire, une valeur non nulle de l'angle $\psi_L$ constitue un écart de trajectoire.

Par rapport au repère absolu $\{O_a, X_a, Y_a\}$, le centre de gravité CG se déplace à une vitesse $V_{CG}$ dont le vecteur, exprimé dans le repère relatif lié $\{O_t, X_{CG}, Y_{CG}\}$ fait un angle P avec l'axe $X_{CG}$. Le vecteur de vitesse au centre de gravité comporte alors une composante $v = V_{CG} \cdot \cos\beta$ selon l'axe $X_{CG}$ et une composante $u = V_{CG} \cdot \sin\beta$ selon l'axe $Y_{CG}$. La vitesse u correspond à une vitesse de ripage transversale au véhicule. La vitesse v correspond à une vitesse longitudinale du véhicule égale à la vitesse $V_{CG}$ en absence de ripage. L'angle P est généralement nommé angle de dérive.

On rappelle que dans le domaine technique considéré, la vitesse de rotation du véhicule autour d'un axe $Z_a$ perpendiculaire au plan de la figure, est nommée vitesse de lacet. Dans le cadre des explications de l'invention qui suivent, la vitesse de lacet est désignée par la lettre r. La vitesse de lacet étant la dérivée par rapport au temps de l'angle de cap effectif $\psi$ du véhicule, elle est définie par la formule :

$$r = \partial\Psi/\partial t = \partial\Psi_d/\partial t + \partial\Psi_L/\partial t$$

Sur le modèle bicyclette illustré par la figure 3, les roues avant 3, 4 sont représentées par une roue unique avant qui fait un angle $\delta_f$ avec l'axe $X_{CG}$ à une distance $l_f$ du centre de gravité CG, distance non reportée sur la figure par souci de clarté. La roue unique avant présente une rigidité de dérive égale à la somme des rigidités de dérive $c_f$ de chacune des roues 3, 4, généralement de valeurs identiques obtenues auprès du fournisseur de pneumatique des roues ou au moyen d'essais de roulage sur circuit.

De même, les roues arrière 5, 6 sont représentées par une roue unique arrière qui fait un angle $\delta_r$ avec l'axe $X_{CG}$ à une distance $l_r$ du centre de gravité CG, distance ici encore non reportée sur la figure par souci de clarté. La roue unique arrière présente aussi une rigidité de dérive égale à la somme des rigidités de dérive $c_r$ de chacune des roues 5, 6, généralement de valeurs identiques obtenues également auprès du fournisseur de pneumatique des roues ou au moyen d'essais de roulage sur circuit.

Lorsque les angles de braquage $\delta_f$ et $\delta_r$ sont de valeur nulle, la variation $\dot{\beta}$ de l'angle de dérive et la variation $\dot{r}$ de la vitesse de lacet obéissent aux lois de la dynamique sans perturbations que l'on rappelle ci-dessous en considérant des angles de dérives faibles :

$$\dot{\beta} = -\frac{2(c_r + c_f)}{Mv}\beta - \left(1 - \frac{2(l_r c_r - l_f c_f)}{Mv^2}\right)r$$

$$\dot{r} = -\frac{2(l_r c_r - l_f c_f)}{J}\beta - \left(\frac{2(l_r^2 c_r - l_f^2 c_f)}{Jv}\right)r$$

Dans la formule de définition de la vitesse de lacet qui est donnée ci-dessus, la variation de l'angle de cap peut aussi s'exprimer de la manière suivante en fonction de la courbure $\rho_{ref}$ de la trajectoire 30 de référence, la courbure $\rho_{ref}$ étant égale à l'inverse du rayon de courbure R au point $O_t$ à chaque instant t.

$$\partial\Psi_d \big/ \partial t = v \cdot \rho_{ref}$$

De la sorte, pour une trajectoire rectiligne uniforme, on obtient :

$$\partial\Psi_L \big/ \partial t = r$$

Dans le modèle bicyclette de la figure 3 qui représente le véhicule 1, on considère l'écart $y_L$ entre l'axe $X_t$ et l'axe $X_{CG}$ mesurable sur un front du véhicule à une distance $l_s$ en avant du centre de gravité CG.

On note que l'écart est généralement nul lorsque le véhicule suit parfaitement sa trajectoire, notamment lorsque le déport transversal du centre de gravité CG et l'angle de dérive $\beta$ sont de valeur nulle ou se compensent. Il existe aussi des cas dans lesquels le véhicule suit parfaitement sa trajectoire avec un écart latéral non nul en avant du véhicule en raison de la courbure de la trajectoire de référence.

On constate sur le schéma de la figure 3 qu'une variation d'écart d'axe $\dot{y}_L = \partial y_L \big/ \partial t$ vérifie l'équation géométrique suivante :

$$\dot{y}_L = v \cdot \left(\tan\beta + \tan\Psi_L\right) + l_s \cdot r$$

Lorsque les angles P et $\psi_L$ sont petits, l'équation géométrique ci-dessus peut encore s'écrire :

$$\dot{y}_L = v \cdot \beta + l_s \cdot r + v \cdot \Psi_L$$

La mise en oeuvre de l'invention considère un vecteur d'état x défini de la manière suivante en utilisant la convention d'écriture du langage matriciel pour laquelle la lettre T portée en exposant d'un vecteur ou d'une matrice, désigne la transposée de ce vecteur ou de cette matrice :

$$(\beta, \ r, \ \Psi_L, \ y_L)^T = x$$

Les lois physiques expliquées ci-dessus pour évaluer le comportement du véhicule sur sa trajectoire, peuvent être synthétisées au moyen d'une matrice A d'évolution d'état ci-dessous définie.

$$A = \begin{pmatrix} -\dfrac{2(c_r + c_f)}{Mv} & -1 + \dfrac{2(l_r c_r - l_f c_f)}{Mv^2} & 0 & 0 \\ \dfrac{2(l_r c_r - l_f c_f)}{J} & -\dfrac{2(l_r^2 c_r + l_f^2 c_f)}{Jv} & 0 & 0 \\ 0 & 1 & 0 & 0 \\ v & l_s & v & 0 \end{pmatrix}$$

On note que les paramètres qui interviennent dans la matrice A d'évolution d'état, sont constants lors d'un même déplacement du véhicule à l'exception du paramètre de vitesse v.

En absence de perturbations extérieures, le vecteur d'état x évolue alors dans le temps de la manière suivante sur une trajectoire rectiligne :

$$\dot{x} = Ax$$

Lorsque la trajectoire 30 n'est pas rectiligne, la courbure $\rho_{ref}$ introduit un vecteur $B\rho$ de perturbation sur la variation $\dot{x}$ du vecteur d'état telle que :

$$\dot{x} = Ax + B_\rho \rho_{ref}$$

Avec

$$B_\rho = (0, 0, -v, 0)^T$$

D'autres actions extérieures au système de maintien du véhicule sur sa trajectoire, volontaires ou non, sont considérées comme des perturbations qui peuvent ou non se compenser les unes les autres.

Ainsi par exemple, le braquage des roues avant commandé par le conducteur, notamment pour se conformer à la courbure de trajectoire, introduit aussi un vecteur $B_f$ de perturbation qui intervient sur l'évolution temporelle du vecteur d'état x proportionnellement à l'angle de braquage $\delta_f$ des roues avant piloté à partir du volant entre les mains du conducteur, voire par un système de pilotage automatique, l'un comme l'autre hors du cadre de l'invention.

$$\dot{x} = Ax + B_f \delta_f$$

D'autres perturbations, plus aléatoires et plus difficilement mesurables, peuvent aussi intervenir comme par exemple, une rafale de vents transversaux ou une discontinuité d'adhérence de la chaussée due par exemple à une plaque de verglas.

Maintenant que nous avons expliqué, parmi les lois physiques qui régissent le comportement du véhicule par rapport à la trajectoire de référence 30, celles considérées essentielles dans le cadre de l'invention, nous allons expliquer comment l'invention intervient sur le vecteur d'état x pour l'amener et le maintenir de manière stable à des valeurs qui correspondent à un maintien du véhicule sur sa trajectoire.

Le dispositif 40 comprend un module 50 qui élabore en temps réel une correction stabilisante $\delta_0^*$. En d'autres termes, la correction $\delta_0^*$ cherche à obtenir un vecteur d'état x qui traduit un suivi parfait de la trajectoire de référence 30 de manière constante.

Pour ce faire, le module 50 reçoit à chaque instant t, la valeur d'au moins une, et de préférence de chacune des valeurs des variables d'état du vecteur d'état x, notamment de chacun des écarts $\beta$, $\psi_L$, $y_L$ et de la vitesse de lacet r effective. La vitesse de lacet r effective comporte la somme d'une vitesse de lacet conforme à la trajectoire et un écart de vitesse de lacet par rapport à ladite vitesse de lacet conforme. Ainsi, une partie seulement de la vitesse de lacet r est représentative d'un écart de trajectoire lorsqu'il existe une vitesse de lacet conforme à la trajectoire qui présente une courbure. La totalité de la vitesse de lacet r est représentative d'un écart de trajectoire lorsque la trajectoire est rectiligne.

Pour mesurer ou estimer les valeurs des variables d'état, le véhicule 1 comprend une caméra 31 en plus du capteur 14. La caméra 31 est disposée à l'avant du véhicule, par exemple au niveau du rétroviseur central pour capturer des images de la route à l'avant du véhicule et en déduire au moyen d'un logiciel de traitement d'images, la position du véhicule sur la route. La caméra 31 est particulièrement utile pour mesurer 0l'écart transversal $y_L$. Le capteur 14, de préférence sous forme de gyroscope, délivre en temps réel la vitesse de lacet r véhicule dans le repère fixe $\{O_a, X_a, Y_a\}$. D'autre part, l'angle $\psi_L$ peut être obtenu mais non nécessairement au moyen d'un compas électronique de type connu ou au moyen d'algorithmes de traitement d'image semblables à ceux utilisés pour estimer l'écart latéral $y_L$.

Un bloc d'entrée 22 reçoit les signaux en provenance des capteurs 12 à 14, et notamment la vitesse du véhicule V, la vitesse de lacet $r = \dot{\psi}$ et l'angle de roues avant $\delta_f$. La vitesse du véhicule peut être obtenue en faisant la moyenne de la vitesse des roues avant et/ou des roues arrière telle que mesurée par les capteurs d'un système antiblocage de roues. Dans ce cas, il est prévu un capteur 13 par roue, le système antiblocage de roues comprenant une sortie reliée à une entrée de l'unité de commande 11 pour fournir l'information de vitesse du véhicule. Alternativement, chaque capteur 13 est relié à une entrée de l'unité de commande 11, l'unité de commande 11 effectuant alors la moyenne de la vitesse des roues. Le bloc 22 transmet la vitesse de lacet r sur l'entrée 42, la valeur de l'écart d'angle $\psi_L$ sur l'entrée 43 et la valeur de l'écart $y_L$ sur l'entrée 44, valeurs qui sont communiquées en temps réel au module 50. Si le bloc 22 dispose de moyens pour estimer l'angle de dérive $\beta$, la valeur de l'angle de dérive est transmise sur l'entrée 41 pour être communiquée directement au module 50. Pour les cas où le bloc 22 ne dispose pas de moyens pour estimer l'angle de dérive $\beta$, le dispositif 40 peut comprendre un module 47 qui estime l'angle de dérive $\beta$ à partir de la vitesse v du véhicule transmise alors sur l'entrée 41, de l'angle de braquage des roues avant transmis sur l'entrée 45 et de la vitesse de lacet r déjà reçue sur l'entrée 42. Le module 47 génère alors un angle de dérive estimés $\hat{\beta}$ à destination du module 50, en utilisant par exemple l'observateur d'état enseigné par le brevet EP 1544080B1.

Le module 50 élabore la correction $\delta_0{}^*$ en multipliant l'écart $\psi_L$ et/ou $y_L$ respectivement par un facteur de gain $k_\psi$, $k_y$ en vue de l'exploiter dans le braquage des roues arrière pour annuler chaque écart traité.

De préférence, le module 50 contient en mémoire au moins un vecteur de gain K de dimension égale à celle du vecteur d'état x.

$$K = [\ k_\beta, \ k_r, \ k_\Psi, \ k_y\ ]$$

Le module 50 élabore alors la correction $\delta_0{}^*$ en effectuant le produit scalaire du vecteur de gain K par le vecteur d'état x.

$$\delta_0{}^* = K \cdot x = k_\beta \hat{\beta} + k_r r + k_\Psi \Psi_L + k_y y_L$$

Ainsi, la correction $\delta_0{}^*$ varie linéairement par rapport à au moins un écart $\psi_L$, $y_L$ avec un coefficient de proportionnalité $k_\psi$, $k_y$. Le ou les coefficients de proportionnalité sont déterminé hors ligne de façon à optimiser la manière de varier de la correction stabilisante $\delta_0{}^*$ comme nous le verrons dans la suite de la description.

Dans le mode de mise en oeuvre le plus simple de l'invention, la correction $\delta_0{}^*$ est directement transmise sur la sortie 46 pour être appliquée aux roues directrice arrière en tant que consigne de braquage $\delta_r{}^*$.

Avantageusement, le dispositif 40 comprend un module de supervision 48 pour générer un coefficient de pondération $\mu$ associé en temps réel à un contexte de fonctionnement du véhicule 1 et un module d'ajustement 49 agencé pour obtenir la consigne de braquage $\delta_r{}^*$ en multipliant la correction stabilisante $\delta_0{}^*$ par le coefficient de pondération $\mu$ variable.

Le coefficient de pondération $\mu$ est paramétré hors ligne de façon à être stocké sous forme de formule à rapidité d'exécution compatible avec le temps réel ou sous forme de tableau adressable par une variable qui quantifie le contexte de fonctionnement pour lequel le coefficient de pondération $\mu$ est appliqué.

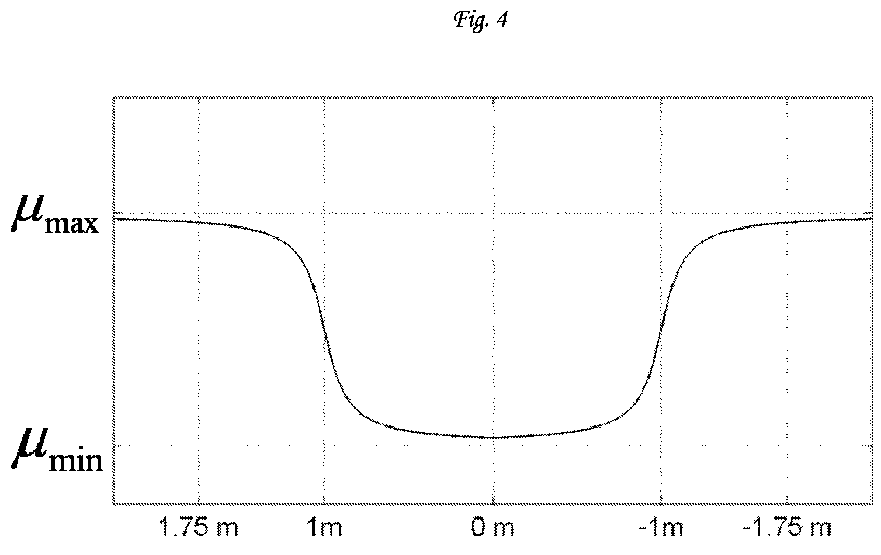

La figure 4 illustre une variation possible du coefficient de pondération $\mu$. On y porte en abscisse la variable temps réel dont on fait dépendre le coefficient de pondération $\mu$, et en ordonnée le coefficient de pondération $\mu$ lui-même qui est compris entre une valeur minimale $\mu_{min}$ et une valeur maximale $\mu_{max}$. La valeur maximale du coefficient

de pondération μ est généralement prise égale à l'unité de manière à obtenir un gain pondéré μK optimal en termes d'efficacité et de stabilité. La valeur minimale du coefficient de pondération μ est comprise entre zéro et la valeur maximale. Lorsque la valeur minimale est prise égale à zéro, c'est pour occulter totalement l'intervention du dispositif 40 dans certains contextes de fonctionnement du véhicule. Lorsque la valeur minimale est prise égale à la valeur maximale, elle-même prise égale à l'unité, c'est pour faire jouer totalement l'intervention du dispositif 40 indépendamment des contextes de fonctionnement du véhicule. Le conducteur peut alors ressentir une rigidité du contrôle de trajectoire qui n'est pas forcément pour lui plaire. Entre ces deux extrêmes, la valeur minimale $\mu_{min}$ du coefficient de pondération, par exemple sensiblement égale à 0,2, assouplit le contrôle de trajectoire en modérant l'intervention du dispositif 40 dans les contextes de fonctionnement du véhicule qui permettent une plus grande liberté du conducteur. Le dispositif 40 apporte alors simplement un soutien agréable au conducteur dans son maintien de trajectoire. Dans les contextes de fonctionnement du véhicule qui sont critiques, le rapprochement du coefficient de pondération de sa valeur maximale, notamment de la valeur unitaire, impose le contrôle du dispositif 40 pour contribuer intensément à la sécurité.

Dans le premier exemple de variation possible du coefficient de pondération μ, tel qu'il est illustré par la figure 4, la variable de quantification contextuelle prend la valeur d'un écart latéral $w_L$ de distance entre le point milieu de l'essieu avant du véhicule et le point correspondant sur la trajectoire 30 de référence. L'écart latéral $w_L$ de distance est donné par la formule :

$$\mathrm{w}_{L} := \mathrm{y}_{L} + \left( l_{f} - l_{s} \right) \Psi_{L}$$

Dans le cas d'une largeur de voie égale par exemple à 3,50 m, les limites extrêmes 31, 32 de la voie se trouvent chacune à 1,75 m respectivement à gauche et à droite de la trajectoire 30 de référence située au milieu de la voie. L'empattement a des roues avant étant équiréparti de chaque côté de la ligne médiane du véhicule, une roue avant touche l'une des limites extrêmes 31, 32 de la voie pour une valeur nulle de la variable $var_1$ définie par la formule suivante :

$$\mathrm{var}_{1} = \left| \mathrm{w}_{L} \right| - \left( 1,75 - \frac{\mathrm{a}}{2} \right)$$

On quantifie alors la courbe de la figure 4 par l'expression suivante :

$$\mu\left(\mathrm{w}_{L}\right) := \mu_{min} + \frac{\left(\mu_{max} - \mu_{min}\right)}{2}\left[1 + \frac{\arctan\left(\mathrm{c}_{1} \cdot \mathrm{var}_{1}\right)}{\pi/2}\right]$$

Dans laquelle le paramètre $c_1$ est un paramètre d'ajustement de la pente de montée en intensité de l'action correctrice en fonction de l'écart latéral sur la voie. L'intervention de la correction peut se faire plus ou moins graduellement selon la prestation souhaitée. Le paramètre $c_1$ est un paramètre constitue un paramètre de calibration que l'on peut faire varier pendant une phase de mise au point du véhicule sur circuit et/ou en fonction de tests sur des profils de conducteurs avant de stocker la valeur du paramètre $c_1$ dans un emplacement de structure mémoire du dispositif 40.

On remarque que l'action correctrice sur les roues arrière s'intensifie au fur et à mesure que le point milieu de l'essieu avant du véhicule s'approche des bords de la route.

D'autres lois de variation du coefficient de pondération μ sont envisageables. A titre illustratif le contexte de fonctionnement peut être lié à une décision du conducteur de sortir volontairement de la voie courante de circulation, en vue par exemple de modifier son itinéraire ou d'éviter un obstacle. La variable de quantification contextuelle est alors typiquement l'angle du volant qui donne la référence de braquage $\delta_f{}^*$ sur les roues avant. A l'inverse de la variation présentée sur la figure 4, le coefficient de pondération μ évolue d'une valeur maximale lorsque la référence de braquage $\delta_f{}^*$ donnée par le volant est nulle, traduisant alors une volonté marquée du conducteur de rester en ligne droite à une valeur minimale lorsque la référence de braquage $\delta_f{}^*$ donnée par le volant est d'amplitude élevée, traduisant alors une volonté marquée du conducteur de prendre intégralement en main la direction de son véhicule.

Le module 49 ayant multiplié par le coefficient de pondération μ la correction $\delta_0{}^*$ élaborée par le module 50, le dispositif 40 délivre sur la sortie 46 une référence $\delta_r{}^*$ de braquage des roues arrière donnée par la formule exprimée ci-dessous.

$$\delta_{r}{}^* = \mu \cdot K \cdot x = \mu \cdot \left( k_{\beta}\hat{\beta} + k_{r}r + k_{\Psi}\Psi_{L} + k_{y}y_{L} \right)$$

La référence $\delta_r$* de braquage appliquée aux actionneurs 19, 20 des roues arrière, provoque un braquage $\delta_r$ qui, à la constante de temps de réponse près des actionneurs, est égale à la référence $\delta_r$* de braquage.

On rappelle qu'un angle de braquage $\delta_r$ intervient sur les variables d'état de la manière suivante :

$$\begin{pmatrix} \dot{\beta} \\ \dot{r} \\ \dot{\Psi}_L \\ \dot{y}_L \end{pmatrix} = \begin{pmatrix} -\dfrac{2(c_r+c_f)}{Mv} & -1+\dfrac{2(l_rc_r-l_fc_f)}{Mv^2} & 0 & 0 \\ \dfrac{2(l_rc_r-l_fc_f)}{J} & -\dfrac{2(l_r^2c_r+l_f^2c_f)}{Jv} & 0 & 0 \\ 0 & 1 & 0 & 0 \\ v & l_s & v & 0 \end{pmatrix} \cdot \begin{pmatrix} \beta \\ r \\ \Psi_L \\ y_L \end{pmatrix} + \begin{pmatrix} \dfrac{2c_r}{Mv} \\ -\dfrac{2l_rc_r}{J} \\ 0 \\ 0 \end{pmatrix} \cdot \left(\delta_r\right)^T$$

En définissant le vecteur d'interaction Br tel que :

$$\mathrm{Br} = \left[ \dfrac{2c_r}{Mv}, -\dfrac{2l_rc_r}{J}, 0,0 \right]^T$$

On obtient l'équation d'état du véhicule en boucle fermée :

$$\dot{\mathbf{x}} = \left(\mathbf{A} + \boldsymbol{\mu}\cdot\mathbf{B}_r\cdot\mathbf{K}\right)\cdot\mathbf{x} = \mathbf{F}\cdot\mathbf{x}$$

Plusieurs remarques sont à faire pour le choix de la loi de commande. La stabilité dynamique du véhicule relative à la vitesse de lacet et à l'angle de dérive est contrôlée par les facteurs $k_\beta\hat{\beta}$ + $k_r$r. La tenue de route sur la voie de circulation est contrôlée par les facteurs $k_{\psi L}\psi_L$ +$k_{yL}y_L$ L'ajustement de l'intensité de l'action de braquage arrière est réglé par le coefficient de pondération $\mu$. La seule hypothèse faite sur le coefficient de pondération $\mu$ est que ses valeurs sont bornées par une valeur minimale positive est une valeur maximale de préférence égale à l'unité. Aucune hypothèse n'est faite sur la façon de varier du coefficient de pondération $\mu$.

On note aussi que la matrice d'asservissement F en boucle fermée définie dans l'équation d'état explicitée ci-dessus, comporte la matrice A d'évolution d'état du véhicule et le coefficient de pondération $\mu$ multiplié par un vecteur d'interaction Br multiplié par la transposée du vecteur de gain K qui donne une matrice de dimension égale à celle de la matrice A d'évolution d'état.

Maintenant que nous venons d'expliquer les lois physiques qui régissent la réaction du véhicule à un angle de braquage non nul des roues arrière, nous expliquons comment quantifier K dans la loi de commande pour obtenir la stabilité.

Le vecteur de gain K est quantifié de manière à ce que la matrice d'asservissement F en boucle fermée comporte des pôles à partie réelle négative pour toute valeur du coefficient de pondération $\mu$ comprise entre sa valeur minimale et sa valeur maximale, notamment entre 0,1 et 1.

Comme on l'a vu précédemment, la matrice F comporte des coefficients qui dépendent de la vitesse. La quantification optimale du vecteur K pour une vitesse v donnée du véhicule n'est pas nécessairement optimale pour une autre vitesse. Le vecteur de gain K comporte des valeurs dédiées à une vitesse v courante du véhicule à l'instant où le vecteur de gain K est exploité.

Lorsque le dispositif 40 de contrôle de trajectoire est prévu pour fonctionner uniquement à une vitesse v prédéterminée et éventuellement à des vitesses dans une plage de tolérance qui encadre la vitesse v prédéterminée, le module d'élaboration 50 comprend une colonne de cellules mémoire pour contenir les coordonnées du vecteur de gain K qui comprennent les coefficients de proportionnalité $k_\beta$, $k_r$, $k_\psi$, $k_y$.

Lorsque le dispositif 40 de contrôle de trajectoire est prévu pour fonctionner dans une plage étendue de vitesses v du véhicule, le module d'élaboration 50 peut comprendre plusieurs colonnes de cellules mémoire, chaque colonne contenant les coordonnées du vecteur de gain K adaptée à une valeur discrète de vitesse. Les valeurs du vecteur de gain K dédiées à une vitesse v courante du véhicule qui est comprise entre deux valeurs discrètes de vitesse les plus proches auxquelles sont attribuées des colonnes de cellules mémoire, sont calculées par approximation linéaire entre les valeurs des deux colonnes.

On peut aussi prévoir une seule colonne de cellules mémoire dans lesquelles sont téléchargées les valeurs du vecteur de gain K au fur et à mesure de l'évolution de vitesse du véhicule. La colonne de cellules mémoire joue alors le rôle de tampon d'exécution du module d'élaboration 50.

Le module d'élaboration 50 effectue la multiplication du vecteur d'état x par le vecteur de gain K en temps réel, c'est-à-dire à une fréquence d'échantillonnage et d'exécution élevée, par exemple à 50 Hz ou plus, pour ne pas nuire à la stabilité de la boucle de régulation. Pour les mêmes raisons, le module d'ajustement 49 effectue la multiplication de la correction $\delta_r$* par le coefficient de pondération $\mu$. Ceci est facilement réalisable car les opérations de multiplication et de sommation restent des opérations simples.

Les valeurs du vecteur de gain K sont quantifiées hors ligne, c'est-à-dire à une fréquence d'échantillonnage et d'exécution plus faible que la fréquence temps réel, par exemple à 1 Hz ou moins, voire à fréquence nulle. A fréquence nulle, les valeurs du vecteur de gain K sont calculées une seule fois puis mises à disposition en mémoire, éventuellement pour plusieurs véhicules du même type. La quantification hors ligne peut se faire dans le dispositif 40 si celui-ci dispose des ressources de calcul suffisantes. La quantification hors ligne peut se faire aussi dans des calculateurs puissants à disposition des services de développement des véhicules de façon à ne pas augmenter le coût du dispositif 40.

Le procédé de production hors ligne du vecteur de gain K est expliqué à présent pour une vitesse v unique du véhicule. On comprendra que les actions du procédé sont répétées autant de fois que nécessaire pour couvrir plusieurs vitesses possibles du véhicule. Lorsque l'ensemble des vitesses possibles est balayé, le stockage des valeurs du vecteur de gain K évite de devoir réactiver le procédé de production.

On rappelle que les théorèmes de stabilité dynamique des systèmes linéaires exigent que les pôles de la matrice F=A+$\mu$B$_r$K soient à partie réel négative pour toute valeur de $\mu$. On rappelle aussi que cette exigence est satisfaite s'il existe une fonction V(x)=x$^T$Px, avec P une matrice carrée définie positive, dite fonction de Lyapunov, telle que :

$$\frac{\partial V}{\partial t} < 0 \quad \forall x \in \mathrm{R}^4 \quad \text{et} \quad \forall \mu \in \left[\mu_{\min} ; \mu_{\max} = 1\right]$$

On rappelle qu'une matrice carrée est définie positive, respectivement négative lorsque la forme quadratique définie par la matrice est positive, respectivement négative, pour tout vecteur x non nul. Ceci revient par exemple à dire dans le cas ci-dessus pour la matrice P que la fonction V(x) est positive pour toute valeur de x non nulle.

Les règles de dérivation habituelles des produits matriciels et le choix de remplacer la dérivée du vecteur x par le produit de la matrice F avec le vecteur x, conduisent à l'équation matricielle équivalente suivante :

$$\mathrm{x}^T \cdot \mathrm{F}^T \cdot \mathrm{P} \cdot \mathrm{x} + \mathrm{x}^T \cdot \mathrm{P} \cdot \mathrm{F} \cdot \mathrm{x} < 0 \quad \forall x \in \mathrm{R}^4$$

Le membre de gauche de l'inégalité ci-dessus exprime une matrice définie négative dans laquelle en remplaçant la matrice F par son expression en fonction de A et K :

$$\left(A + \mu \cdot B_r \cdot K\right)^T \cdot P + P \cdot \left(A + \mu \cdot B_r \cdot K\right) \prec 0 \quad \forall \mu \in \left[\mu_{\min} ; \mu_{\max} = 1\right]$$

L'inéquation matricielle ci-dessus contient deux inconnues tensorielles, le vecteur K et la matrice P. Le vecteur K et la matrice P doivent être solution de l'inéquation matricielle pour toute valeur de $\mu$.

L'inéquation matricielle ci-dessus est difficile à résoudre car elle constitue un polynôme tensoriel quadratique de part le produit de la matrice inconnue P par le vecteur inconnu K qu'elle comporte.

En multipliant à gauche et à droite chacun des membres de l'inéquation ci-dessus par une matrice Q=P$^{-1}$ et en effectuant le changement de variable bijectif Y=K·Q, on obtient l'inéquation matricielle ci-dessous :

$$Q \cdot \left(A^T + \mu \cdot K^T \cdot B_r{}^T\right) + \left(A + \mu \cdot B_r \cdot K\right) \cdot Q \prec 0 \quad \forall \mu \in \left[\mu_{\min} ; \mu_{\max} = 1\right]$$

En développant les membres de l'inéquation ainsi obtenue, on observe que l'inéquation matricielle est linéaire par rapport aux deux nouvelles inconnues Q et Y :

$$Q \cdot A^T + \mu \cdot Y^T \cdot B_r{}^T + A \cdot Q + \mu \cdot B_r \cdot Y \prec 0 \quad \forall \mu \in \left[\mu_{\min} ; \mu_{\max} = 1\right]$$

La formulation ci-dessus permet d'exploiter les propriétés des inégalités matricielles linéaires (LMI pour Linear Matrix Inequality en anglais) selon lesquelles il suffit de vérifier que le polynôme matriciel du premier degré est défini négatif sur chacune des valeurs extrêmales du coefficient de pondération $\mu$ pour que le polynôme matriciel soit défini négatif sur toutes les valeurs du coefficient de pondération $\mu$ comprises entre les valeurs extrêmales.

Il existe de nombreux outils du commerce permettant de résoudre les inégalités matricielles linéaires. A titre d'exemple purement illustratif et non exhaustif, c'est notamment le cas de « Toolbox LMI » sous « Matlab » bien connu. Il existe aussi de tels outils logiciels sous licence GNU qu'on peut retrouver librement sur Internet.

On utilise alors l'un de ces outils connus pour retrouver par optimisation convexe la matrice inconnue Q et le vecteur inconnu Y vérifiant les deux inégalités matricielles linéaires LMI négatives suivantes :

$$Q \cdot A^T + \mu_{\min} \cdot Y^T \cdot B_r^{\ T} + A \cdot Q + \mu_{\min} \cdot B_r \cdot Y \prec 0$$

$$Q \cdot A^T + \mu_{\max} \cdot Y^T \cdot B_r^{\ T} + A \cdot Q + \mu_{\max} \cdot B_r \cdot Y \prec 0$$

L'utilisation de l'outil au sein du procédé permet alors d'obtenir le vecteur de gain K en multipliant simplement le vecteur inconnu Y retrouvé par l'inverse de la matrice inconnue Q retrouvée.

L'utilisation du vecteur de gain K dans le dispositif 40 permet d'asservir le retour d'état du vecteur x à une valeur de référence correspondant à une absence d'écart de trajectoire, en agissant sur le braquage des roues arrière. Comme toute boucle d'asservissement, celle mise en oeuvre par le dispositif 40 possède un temps de réponse lié aux différentes fonctions de transfert du véhicule mises à contribution.

Pour réduire le temps de réponse, on introduit une constante positive dans la résolution des inégalités matricielles de la façon suivante :

$$Q \cdot A^T + \mu_{\min} \cdot Y^T \cdot B_r^{\ T} + A \cdot Q + \mu_{\min} \cdot B_r \cdot Y + 2\xi \cdot Q \prec 0$$

$$Q \cdot A^T + \mu_{\max} \cdot Y^T \cdot B_r^{\ T} + A \cdot Q + \mu_{\max} \cdot B_r \cdot Y + 2\xi \cdot Q \prec 0$$

Pour s'assurer que le vecteur de gain K obtenu ne génère pas une consigne de braquage aux roues arrières au-delà de celle à laquelle peuvent répondre les actionneurs 19, 20, on fournit à l'outil des valeurs maximales admissibles d'angle de braquage $\delta_r^{\max}$ des roues arrière et on lui demande de respecter la contrainte suivante sur le vecteur Y et la matrice Q :

$$\begin{pmatrix} 1 & \dfrac{1}{\delta_r^{\max}} Y \\ \dfrac{1}{\delta_r^{\max}} Y^T & Q \end{pmatrix} \succ = 0$$

Pour s'assurer que le vecteur de gain K obtenu ne provoque pas d'écarts de trajectoire au delà de valeurs maximales admissibles dans la mesure où le début de la correction est fait à l'intérieur d'une région de conduite nominale, on fournit à l'outil des valeurs maximales admissibles de variable d'état $\pm\beta^N$, $\pm r^N$, $\pm\psi^N$, $\pm y_L^N$ définissant une région de conduite nominale et on lui demande de respecter la contrainte suivante sur chacune des huit matrice comprenant la matrice Q et une matrice zi, i variant de 1 à 8 :

$$\begin{pmatrix} 1 & z_i^T \\ z_i & Q \end{pmatrix} \succ = 0$$

La matrice évoquée ci-dessus est composée de quatre matrices dont les dimensions sont les suivants :

$$\begin{pmatrix} 1 & 1\mathrm{x}4 \\ 4\mathrm{x}1 & 4\mathrm{x}4 \end{pmatrix} = \begin{pmatrix} 1 & z & z & z & z \\ z & q & q & q & q \\ z & q & q & q & q \\ z & q & q & q & q \\ z & q & q & q & q \end{pmatrix}$$

On configure enfin l'outil pour effectuer la recherche par optimisation convexe en minimisant la trace de la matrice inconnue Q dans le respect des contraintes évoquées ci-dessus.

**Revendications**

1.  Dispositif (40) de contrôle de trajectoire d'un véhicule (1), comprenant au moins une entrée (43, 44) de réception d'au moins une grandeur représentative d'un ou plusieurs écarts ($\psi_L$, $y_L$) entre une trajectoire de référence (30) et une trajectoire effective du véhicule, et au moins une sortie (46) de production en temps réel d'au moins une consigne de braquage ($\delta_r^*$) applicable à au moins une roue arrière du véhicule (1) de manière à maintenir et/ou ramener ledit véhicule sur sa trajectoire de référence, **caractérisé en ce qu'**il comprend :

    - au moins un module (50) d'élaboration en temps réel d'au moins une correction stabilisante ($\delta_0^*$) variant linéairement par rapport à chaque écart ($\psi_L$, $y_L$) reçu avec un coefficient de proportionnalité ($k_\psi$, $k_y$) quantifié hors ligne de façon à optimiser la manière de varier de la correction stabilisante ($\delta_0^*$) ;
    - au moins un module de supervision (48) paramétré hors ligne pour générer un coefficient de pondération ($\mu$) associé en temps réel à un contexte de fonctionnement du véhicule (10) ; et
    - au moins un module d'ajustement (49) agencé pour obtenir ladite consigne de braquage ($\delta_r^*$) en multipliant ladite correction stabilisante ($\delta_0^*$) par ledit coefficient de pondération ($\mu$) en temps réel.

2.  Dispositif selon la revendication 1, **caractérisé en ce que** ledit coefficient de pondération ($\mu$) varie entre une valeur minimale ($\mu_{min}$) fixée préalablement supérieure ou égale à zéro et une valeur maximale ($\mu_{max}$) fixée préalablement inférieure ou égale à l'unité, en fonction dudit contexte de fonctionnement.

3.  Dispositif selon l'une des revendications 1 ou 2, **caractérisé en ce que** ledit contexte de fonctionnement est quantifié par un écart latéral ($w_L$) de distance entre le point milieu d'un essieu du véhicule et le point correspondant sur la trajectoire (30) de référence

4.  Dispositif selon la revendication 3, **caractérisée en ce que** ledit coefficient de pondération ($\mu$) est croissant lorsque ledit écart latéral ($w_L$) de distance augmente en valeur absolue.

5.  Dispositif (40) selon l'une des revendications précédentes, **caractérisée en ce que** ledit module d'élaboration (50) comprend au moins une colonne de cellules mémoire pour contenir au moins un vecteur de gain (K) qui comporte des coordonnées comprenant au moins le ou lesdits coefficients de proportionnalité ($k_\psi$, $k_y$).

6.  Dispositif (40) selon les revendications 2 et 5, **caractérisée en ce que** le vecteur de gain (K) est quantifié de manière à ce qu'une matrice d'asservissement (F) en boucle fermée comporte des pôles à partie réelle négative pour toute valeur du coefficient de pondération ($\mu$), ladite matrice d'asservissement (F) comportant une matrice (A) d'évolution d'état du véhicule et le coefficient de pondération ($\mu$) multiplié par un vecteur d'interaction (Br) multiplié par le vecteur de gain (K).

7.  Dispositif selon la revendication 6, **caractérisée en ce que** le vecteur de gain (K) comporte des valeurs dédiées à une vitesse (v) courante du véhicule à l'instant où le vecteur de gain (K) est exploité.

8. Procédé de contrôle de trajectoire d'un véhicule (1), à partir d'au moins une grandeur représentative d'un ou plusieurs écarts ($\psi_L$, $y_L$) entre une trajectoire de référence (30) et une trajectoire effective du véhicule, comprenant une phase de production en temps réel d'au moins une consigne de braquage ($\delta_r$*) applicable à au moins une roue arrière du véhicule (1) de manière à maintenir et/ou ramener ledit véhicule sur sa trajectoire de référence, **caractérisé en ce qu'**il consiste à :

   - élaborer en temps réel au moins une correction stabilisante ($\delta_0$*) variant linéairement par rapport à chaque écart ($\psi_L$, $y_L$) reçu avec un coefficient de proportionnalité ($k_\psi$, $k_y$) quantifié hors ligne de façon à optimiser la manière de varier de la correction stabilisante ($\delta_0$*) ;
   - associer en temps réel à un contexte de fonctionnement du véhicule (10), un coefficient de pondération ($\mu$) généré à partir d'un paramétrage hors ligne; et
   - obtenir ladite consigne de braquage ($\delta_r$*) en multipliant ladite correction stabilisante ($\delta_0$*) par ledit coefficient de pondération ($\mu$) en temps réel.

9. Procédé selon la revendication 8, **caractérisé en ce que** ledit coefficient de pondération ($\mu$) varie entre une valeur minimale ($\mu_{min}$) fixée préalablement supérieure ou égale à zéro et une valeur maximale ($\mu_{max}$) fixée préalablement inférieure ou égale à l'unité, en fonction dudit contexte de fonctionnement.

10. Procédé selon l'une des revendications 8 ou 9, **caractérisée en ce qu'**il comprend une phase de production hors ligne d'un vecteur de gain (K) qui comporte des coordonnées comprenant au moins le ou lesdits coefficients de proportionnalité ($k_\psi$, $k_y$).

11. Procédé selon la revendication 10, **caractérisée en ce que** la phase de production hors ligne consiste à quantifier le vecteur de gain (K) de manière à ce qu'une matrice d'asservissement (F) en boucle fermée comporte des pôles à partie réelle négative pour toute valeur du coefficient de pondération ($\mu$), ladite matrice d'asservissement (F) comportant une matrice (A) d'évolution d'état du véhicule et le coefficient de pondération ($\mu$) multiplié par un vecteur d'interaction (Br) multiplié par le vecteur de gain (K).

12. Procédé selon l'une des revendications 10 à 11, dans lequel le vecteur de gain (K) est obtenu au moyen d'un outil retrouvant par optimisation convexe une matrice inconnue (Q) et un vecteur inconnu (Y) vérifiant deux inégalités matricielles linéaires (LMI) négatives respectivement pour la valeur minimale ($\mu_{min}$) et pour la valeur maximale ($\mu_{max}$) du coefficient de pondération ($\mu$) de sorte que le vecteur de gain (K) résulte du produit du vecteur inconnu (Y) retrouvé par l'inverse de la matrice inconnue (Q) retrouvée.

13. Procédé de production selon la revendication 12, dans lequel on fournit à l'outil des valeurs maximales admissibles d'angle de braquage de roues arrière et d'écarts de trajectoire de manière à ce que l'outil retrouve le vecteur inconnu (Y) et la matrice inconnue (Q) qui respectent lesdites valeurs maximales admissibles.

14. Procédé de production selon l'une des revendications 12 ou 13, dans lequel on configure l'outil pour effectuer la recherche par optimisation convexe en minimisant la trace de la matrice inconnue (Q).

15. Véhicule automobile, **caractérisé en ce qu'**il comprend au moins un dispositif selon l'une des revendications 1 à 7 pour élaborer en temps réel au moins une consigne de braquage ($\delta_r$*) sur au moins une roue arrière (5, 6) du véhicule.

## Patentansprüche

1. Vorrichtung (40) zur Spurkontrolle eines Fahrzeugs (1), die mindestens einen Eingang (43, 44) für den Empfang mindestens einer Größe, die für eine oder mehrere Abweichungen ($\psi_L$, $y_L$) zwischen einer Bezugsspur (30) und einer tatsächlichen Spur des Fahrzeugs repräsentativ ist, und mindestens einen Ausgang (46) zur Erzeugung in Echtzeit mindestens eines Lenkeinschlag-Sollwerts ($\delta_r$*) enthält, der an mindestens ein Hinterrad des Fahrzeugs (1) anzuwenden ist, um das Fahrzeug in seiner Bezugsspur zu halten und/oder in sie zurückzubringen, **dadurch gekennzeichnet, dass** sie enthält:

   - mindestens ein Modul (50) zur Ausarbeitung in Echtzeit mindestens einer stabilisierenden Korrektur ($\delta_0$*), die bezüglich jeder empfangenen Abweichung ($\psi_L$, $y_L$) linear mit einem offline quantisierten Proportionalitätskoeffizienten ($k_\psi$, $k_y$) variiert, um die Art der Änderung der stabilisierenden Korrektur ($\delta_0$*) zu optimieren;

- mindestens ein offline parametriertes Überwachungsmodul (48), um einen Gewichtungskoeffizienten ($\mu$) zu generieren, der in Echtzeit einem Betriebskontext des Fahrzeugs (10) zugeordnet ist; und
- mindestens ein Einstellmodul (49), das eingerichtet ist, um den Lenkeinschlag-Sollwert ($\delta_r{}^*$) durch Multiplizieren der stabilisierenden Korrektur ($\delta_0{}^*$) mit dem Gewichtungskoeffizienten ($\mu$) in Echtzeit zu erhalten.

2. Vorrichtung nach Anspruch 1, **dadurch gekennzeichnet, dass** der Gewichtungskoeffizient ($\mu$) zwischen einem Mindestwert ($\mu_{min}$), der vorab höher als oder gleich Null festgelegt wird, und einem Höchstwert ($\mu_{max}$) variiert, der vorab niedriger als die oder gleich der Einheit festgelegt wird, abhängig vom Betriebskontext.

3. Vorrichtung nach einem der Ansprüche 1 oder 2, **dadurch gekennzeichnet, dass** der Betriebskontext durch eine seitliche Abstandsabweichung ($w_L$) zwischen dem Mittelpunkt einer Achse des Fahrzeugs und dem entsprechenden Punkt auf der Bezugsspur (30) quantisiert wird.

4. Vorrichtung nach Anspruch 3, **dadurch gekennzeichnet, dass** der Gewichtungskoeffizient ($\mu$) aufsteigend ist, wenn die seitliche Abstandsabweichung ($w_L$) im Absolutwert zunimmt.

5. Vorrichtung (40) nach einem der vorhergehenden Ansprüche, **dadurch gekennzeichnet, dass** das Ausarbeitungsmodul (50) mindestens eine Spalte von Speicherzellen enthält, um mindestens einen Verstärkungsvektor (K) zu enthalten, der Koordinaten aufweist, die mindestens den oder die Proportionalitätskoeffizienten ($k_\psi$, $k_y$) enthalten.

6. Vorrichtung (40) nach den Ansprüchen 2 und 5, **dadurch gekennzeichnet, dass** der Verstärkungsvektor (K) so quantisiert wird, dass eine Nachführmatrix in geschlossener Schleife (F) Pole mit negativem Realteil für jeden Wert des Gewichtungskoeffizienten ($\mu$) aufweist, wobei die Nachführmatrix (F) eine Zustandsentwicklungsmatrix (A) des Fahrzeugs und den Gewichtungskoeffizienten ($\mu$) multipliziert mit einem Interaktionsvektor (Br) multipliziert mit dem Verstärkungsvektor (K) aufweist.

7. Vorrichtung nach Anspruch 6, **dadurch gekennzeichnet, dass** der Verstärkungsvektor (K) Werte aufweist, die für eine laufende Geschwindigkeit (v) des Fahrzeugs in dem Moment bestimmt sind, in dem der Verstärkungsvektor (K) ausgewertet wird.

8. Verfahren zur Spurkontrolle eines Fahrzeugs (1) ausgehend von mindestens einer Größe, die für eine oder mehrere Abweichungen ($\psi_L$, $y_L$) zwischen einer Bezugsspur (30) und einer tatsächlichen Spur des Fahrzeugs repräsentativ ist, das eine Phase der Erzeugung in Echtzeit mindestens eines Lenkeinschlag-Sollwerts ($\delta_r{}^*$) enthält, der an mindestens ein Hinterrad des Fahrzeugs (1) anwendbar ist, um das Fahrzeug in seiner Bezugsspur zu halten und/oder in sie zurückzubringen, **dadurch gekennzeichnet, dass** es darin besteht:

- in Echtzeit mindestens eine stabilisierende Korrektur ($\delta_0{}^*$) auszuarbeiten, die bezüglich jeder empfangenen Abweichung ($\psi_L$, $y_L$) linear mit einem offline quantisierten Proportionalitätskoeffizienten ($k_\psi$, $k_y$) variiert, um die Art der Änderung der stabilisierenden Korrektur ($\delta_0{}^*$) zu optimieren;
- in Echtzeit einem Betriebskontext des Fahrzeugs (10) einen Gewichtungskoeffizienten ($\mu$) zuzuordnen, der ausgehend von einer Offline-Parametrierung generiert wird; und
- den Lenkeinschlag-Sollwert ($\delta_r{}^*$) zu erhalten, indem die stabilisierende Korrektur ($\delta_0{}^*$) mit dem Gewichtungskoeffizienten ($\mu$) in Echtzeit multipliziert wird.

9. Verfahren nach Anspruch 8, **dadurch gekennzeichnet, dass** der Gewichtungskoeffizient ($\mu$) zwischen einem vorab festgelegten Mindestwert ($\mu_{min}$) höher als oder gleich Null und einem vorab festgelegten Höchstwert ($\mu_{max}$) kleiner die als oder gleich der Einheit abhängig vom Betriebskontext variiert.

10. Verfahren nach einem der Ansprüche 8 oder 9, **dadurch gekennzeichnet, dass** es eine Phase der Offline-Erzeugung eines Verstärkungsvektors (K) enthält, der Koordinaten aufweist, die mindestens den oder die Proportionalitätskoeffizienten ($k_\psi$, $k_y$) enthalten.

11. Verfahren nach Anspruch 10, **dadurch gekennzeichnet, dass** die Offline-Erzeugungsphase darin besteht, den Verstärkungsvektor (K) so zu quantisieren, dass eine Nachführmatrix (F) in geschlossener Schleife Pole mit negativem Realteil für jeden Wert des Gewichtungskoeffizienten ($\mu$) aufweist, wobei die Nachführmatrix (F) eine Zustandsentwicklungsmatrix (A) des Fahrzeugs und den Gewichtungskoeffizienten ($\mu$) multipliziert mit einem Interaktionsvektor (Br) multipliziert mit dem Verstärkungsvektor (K) aufweist.

**12.** Verfahren nach einem der Ansprüche 10 bis 11, wobei der Verstärkungsvektor (K) mittels eines Werkzeugs erhalten wird, das durch konvexe Optimierung eine unbekannte Matrix (Q) und einen unbekannten Vektor (Y) findet, die zwei lineare Matrixungleichungen (LMI) erfüllen, die für den Mindestwert ($\mu_{min}$) bzw. für den Höchstwert ($\mu_{max}$) des Gewichtungskoeffizienten ($\mu$) negativ sind, so dass der Verstärkungsvektor (K) aus dem Produkt des gefundenen unbekannten Vektors (Y) mit dem Umkehrwert der gefundenen unbekannten Matrix (Q) resultiert.

**13.** Herstellungsverfahren nach Anspruch 12, wobei dem Werkzeug maximal zulässige Werte eines Lenkeinschlagwinkels der Hinterräder und von Spurabweichungen geliefert werden, damit das Werkzeug den unbekannten Vektor (Y) und die unbekannte Matrix (Q) findet, die die zulässigen Höchstwerte einhalten.

**14.** Herstellungsverfahren nach einem der Ansprüche 12 oder 13, wobei das Werkzeug zur Durchführung der Suche durch konvexe Optimierung konfiguriert wird, indem der Verlauf der unbekannten Matrix (Q) minimiert wird.

**15.** Kraftfahrzeug, **dadurch gekennzeichnet, dass** es mindestens eine Vorrichtung nach einem der Ansprüche 1 bis 7 enthält, um in Echtzeit mindestens einen Lenkeinschlag-Sollwert ($\delta_r$*) an mindestens einem Hinterrad (5, 6) des Fahrzeugs auszuarbeiten.

**Claims**

**1.** Device (40) for controlling the trajectory of a vehicle (1), comprising at least one input (43, 44) for receiving at least one quantity representative of one or more deviations ($\psi_L$, $y_L$) between a reference trajectory (30) and an actual trajectory of the vehicle, and at least one output (46) for producing in real time at least one lock angle setpoint ($\delta_r$*) applicable to at least one rear wheel of the vehicle (1) so as to keep said vehicle on and/or return it to its reference trajectory, **characterized in that** it comprises:

- at least one module (50) for generating in real time at least one stabilizing correction ($\delta_0$*) varying linearly with respect to each deviation ($\psi_L$, $y_L$) received with a proportionality coefficient ($k_\psi$, $k_y$) quantified off-line so as to optimize the manner of varying the stabilizing correction ($\delta_0$*);
- at least one supervision module (48) parameterized off-line to generate a weighting coefficient ($\mu$) associated in real time with a context of operation of the vehicle (10); and
- at least one setting module (49) designed to obtain said lock angle setpoint ($\delta_r$*) by multiplying said stabilizing correction ($\delta_0$*) by said weighting coefficient ($\mu$) in real time.

**2.** Device according to Claim 1, **characterized in that** said weighting coefficient ($\mu$) varies between a previously fixed minimum value ($\mu_{min}$) greater than or equal to zero and a previously fixed maximum value ($\mu_{max}$) less than or equal to unity, as a function of said context of operation.

**3.** Device according to either of Claims 1 and 2, **characterized in that** said context of operation is quantified by a lateral deviation ($w_L$) of distance between the midpoint of an axle of the vehicle and the corresponding point on the reference trajectory (30).

**4.** Device according to Claim 3, **characterized in that** said weighting coefficient (u) grows as said lateral deviation ($w_L$) of distance increases in absolute value.

**5.** Device (40) according to one of the preceding claims, **characterized in that** said generation module (50) comprises at least one column of memory cells for containing at least one gain vector (K) which comprises coordinates comprising at least said proportionality coefficient or coefficients ($k_\psi$, $k_y$).

**6.** Device (40) according to Claims 2 and 5, **characterized in that** the gain vector (K) is quantified in such a way that a closed-loop servo control matrix (F) comprises poles with negative real part for any value of the weighting coefficient ($\mu$), said servo control matrix (F) comprising a state trend matrix (A) for the vehicle and the weighting coefficient ($\mu$) multiplied by an interaction vector (Br) multiplied by the gain vector (K).

**7.** Device according to Claim 6, **characterized in that** the gain vector (K) comprises values dedicated to a current speed (v) of the vehicle at the instant at which the gain vector (K) is utilized.

**8.** Method for controlling the trajectory of a vehicle (1), from at least one quantity representative of one or more deviations

($\psi_L$, $y_L$) between a reference trajectory (30) and an actual trajectory of the vehicle, comprising a phase of production in real time of at least one lock angle setpoint ($\delta_r$*) applicable to at least one rear wheel of the vehicle (1) so as to keep said vehicle on and/or bring said vehicle to its reference trajectory, **characterized in that** it consists in:

- generating in real time at least one stabilizing correction ($\delta_0$*) varying linearly relative to each deviation ($\psi_L$, $y_L$) received with a proportionality coefficient ($k_\psi$, $k_y$) quantified offline so as to optimize the way in which the stabilizing correction ($\delta_0$*) is varied;
- associating in real time, with an operating context of the vehicle (10), a weighting coefficient ($\mu$) generated from an offline parameterization; and
- obtaining said lock angle setpoint ($\delta_r$*) by multiplying said stabilizing correction ($\delta_0$*) by said weighting coefficient ($\mu$) in real time.

9. Method according to Claim 8, **characterized in that** said weighting coefficient ($\mu$) varies between a minimum value ($\mu_{min}$) previously set greater than or equal to zero and a maximum value ($\mu_{max}$) previously set less than or equal to unity, as a function of said operating context.

10. Method according to one of Claims 8 or 9, **characterized in that** it comprises a phase of production offline of a gain vector (K) which comprises coordinates comprising at least said proportionality coefficient or coefficients (($k_\psi$, $k_y$).

11. Method according to Claim 10, **characterized in that** the offline production phase consists in quantifying the gain vector (K) in such a way that a closed loop servo control matrix (F) comprises poles with negative real part for any value of the weighting coefficient ($\mu$), said servo control matrix (F) comprising a vehicle state trend matrix (A) and the weighting coefficient ($\mu$) multiplied by an interaction vector (Br) multiplied by the gain vector (K).

12. Method according to either of Claims 10 and 11, in which the gain vector (K) is obtained by means of a tool retrieving by convex optimization an unknown matrix (Q) and an unknown vector (Y) satisfying two negative linear matrix inequalities (LMI) respectively for the minimum value ($\mu_{min}$) and for the maximum value ($\mu_{max}$) of the weighting coefficient (u) so that the gain vector (K) results from the product of the unknown vector (Y) retrieved times the inverse of the unknown matrix (Q) retrieved.

13. Production method according to Claim 12, in which the tool is provided with maximum admissible values of lock angle of rear wheels and of trajectory deviations in such a way that the tool retrieves the unknown vector (Y) and the unknown matrix (Q) which comply with said maximum admissible values.

14. Production method according to either of Claims 12 and 13, in which the tool is configured to perform the search by convex optimization by minimizing the trace of the unknown matrix (Q).

15. Automotive vehicle, **characterized in that** it comprises at least one device according to one of Claims 1 to 7 for generating in real time at least one lock angle setpoint ($\delta_r$*) in respect of at least one rear wheel (5, 6) of the vehicle.

Fig. 1

Fig. 2

*Fig. 3*

Fig. 4

$\mu_{max}$

$\mu_{min}$

1.75 m     1m     0 m     -1m     -1.75 m

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7236884 B
- WO 2011042791 A
- EP 1544080 B1